# EUROPEAN PATENT SPECIFICATION

(11) **EP 1 068 997 B1**
(45) Date of publication and mention of the grant of the patent: **15.03.2006**
(21) Application number: 00305671.0
(22) Date of filing: 05.07.2000
(51) Int. Cl.: B60R 11/02, B60R 16/02

(54) **Vehicule information, communication and entertainment system**
Informations-, Kommunikations- und Unterhaltungssystem für ein Fahrzeug
Système d'information, de communication et de divertissement dans un véhicule

(30) Priority: 14.07.1999 US 353712
(43) Date of publication of application: 17.01.2001
(73) Proprietor: FORD MOTOR COMPANY, Dearborn, MI 48126 (US)
(72) Inventor: Mufid, Akram, Ann Arbor, Michigan 48108 (US); Markatos, Lori D., Canton, Michigan 48187 (US); Konstantine, John Frank, Dearborn, Michigan 48128 (US); Rushton, Gary John, Warren, Michigan 48092 (US); Golden, Jeffrey Neil, Beverly Hills, Michigan 48025 (US)
(74) Representative: Messulam, Alec Moses

(56) References cited:
- DE-C- 3 546 684
- FR-A- 2 772 959
- GB-A- 1 462 052
- US-A- 5 625 350
- US-A- 5 844 953

## Description

The present invention relates in general to an open, scalable architecture for a vehicle information, communication, and entertainment system, and more specifically, to a personal computer-based vehicle system with a limited number of modules interconnected by plastic optical fibre wherein a complex instruction set processor within a front control unit achieves centralised control throughout the system.

Prior automotive entertainment system architectures have been comprised of a simple human-machine interface (HMI), such as a display and parameter adjustment push buttons or knobs, and a media player, such as a tape deck or CD mechanism. An AM-FM tuner and an amplifier have been included in the same module as the HMI and media player, or have been included in a separate module. As the desire for more entertainment and communication features has increased (such as the demand for cellular phones, compact disc jockey (CDJ), voice recognition, and navigation functions), the new features have been incorporated into the vehicle system by vertically integrating the new function by means of an analogue audio output provided to the amplifier and adding a digital control scheme. This control scheme employs low speed multiplexing so that new modules can be remotely controlled within the system.

The process of adding new modules for each new feature, the reliance on analogue audio signal processing, and the use of low speed multiplexing have led to several limitations and disadvantages. The expansion of the number of electronics modules complicates electrical system interconnects, thereby decreasing reliability and adding weight and cost. Besides all the additional wiring, a large connector with many pins is required at the analogue audio power amplifier's input connection, thereby increasing the cost of the amplifier module.

Such a module expansion strategy and the vertical integration of analogue audio to one amplifier results in a closed architecture with a limited expansion path. Once a particular product is designed, the number of pins available at the power amplifier's input connector limits further system expansion. In addition, such a system has a short lifetime and is not adaptable to new entertainment features such as digital audio and video, digital audio broadcasting (DAB), next generation compact disc, or digital versatile disc (DVD).

This prior art architecture requires the use of redundant hardware resources between modules in order to achieve compatibility with the analogue audio portion of the system. For example, digital-to-analogue converters at the outputs of separate CD player and CDJ modules result in unnecessary duplication.

Currently, the module expansion strategy has reached a practical limit with separate modules for the AM-FM tuner/amplifier, HMI, voice recognition, cellular phone, CDJ, navigation, and remote control panels such as a steering wheel control (SWC), and a rear seat control. In one example, the implementation of such a system required 7 modules and 31 wires. By packaging the HMI and media player together with the tuner and amplifier, a savings of one module and four wires is possible. However, overall power management and large heat generation create other problems which may also limit audio performance.

US patent 5,625,350 describes according to the preamble of claim 1, a communication system for a vehicle including a system control unit for activating a selected audio or video device such as an AM/FM tuner or a navigation system in response to a request signal transmitted on a bus from a command input terminal. The system control unit generates command signals necessary to activate the selected audio or video device in response to the request signal including command signals to de-activate any currently operating devices. Adjustment commands such as a volume change or channel change are transmitted directly and unchanged by the system control unit from the command input terminal to the selected audio or video device.

According to the present invention, there is now provided a vehicle information, communication, and entertainment system providing mobile operation in a vehicle, comprising:
a front control unit including a system control unit and a video processor with a graphics display driver, said front control unit further including user input elements and a graphics display coupled to said graphics display driver for providing a human-machine interface of said system for a user of said vehicle; and
an audio communication unit located remotely from said front control unit and including a digitally controlled audio processor, a broadcast radio tuner, and an audio amplifier with audio outputs for coupling to audio transducers;
characterised in that;
the front control unit has a system control unit that includes a control motherboard with a complex instruction set processor providing an open, scalable architecture,
the front control unit includes an I/O board including an I/O microprocessor connected to the control motherboard and the user input elements are coupled to said complex instruction set processor through the I/O board,
the audio communication unit provides an open, scalable architecture, and
a plastic optical fibre interconnects said front control unit and said audio communication unit;
wherein said front control unit and said audio communication unit each include respective optical transceivers for multiplexing digital data signals and digital control signals over said plastic optical fibre; and
wherein said complex instruction set processor maintains central control over operation of said system.

The present invention has the advantage that an open, scalable architecture is achieved while using a reduced number of modules and interconnects. Furthermore, this new architecture achieves increased use of digital audio and digital signal processing while permitting integration of evolving multi-media, information, communication and entertainment features such as rear seat audio and video entertainment, mayday, and wireless data communications for stock, weather, E-mail, traffic information, sports, headlines, and on-board and off-board navigation with dynamic traffic updates.

The invention will now be described further, by way of example, with reference to the accompanying drawings, in which:
Figure 1 is a block diagram showing a typical prior art vehicle system;
Figure 2 is a block diagram showing the overall concept of the present invention;
Figure 3 is a block diagram showing one embodiment of the front control unit of the present invention in greater detail; and
Figure 4 is a block diagram showing one embodiment of the audio communication unit of the present invention in greater detail.

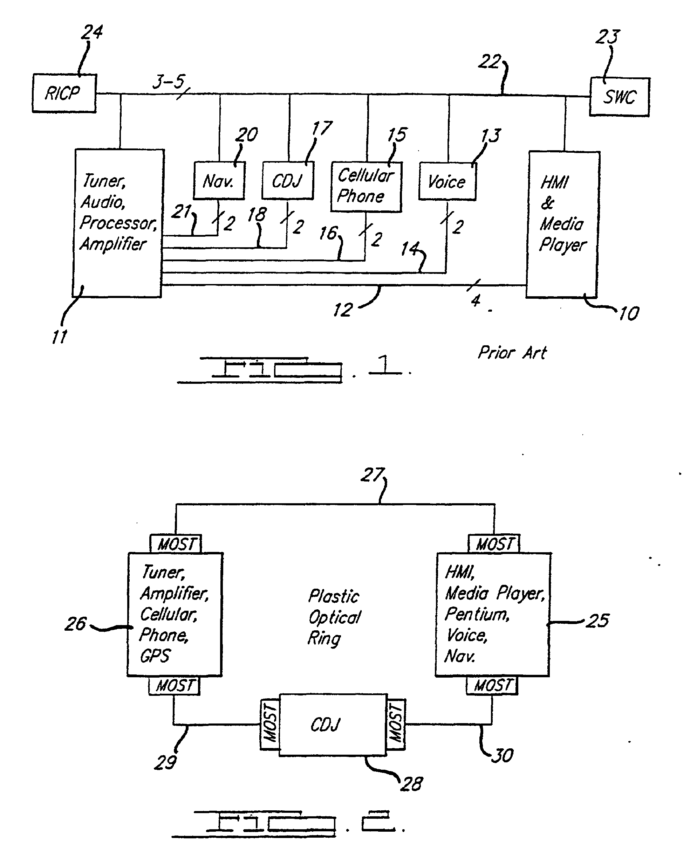

Figure 1 shows a prior art system employing a large number of modules, analogue audio signals, and a low-speed multiplex control architecture. An HMI and media player 10 provides analogue stereo audio signals to a tuner/audio processor/amplifier module 11 over signal lines 12, which typically may consist of four wires comprising two twisted wire pairs. A voice recognition module 13 is connected to a microphone (not shown) for receiving and identifying spoken commands. Voice recognition module 13 synthesises voice signals to generate commands for the user by coupling analogue audio signals over signal lines 14 to module 11. Signal lines 14 preferably also comprise a twisted wire pair.

A cellular phone module 15 comprises a transceiver which utilises module 11 in a hands-free mode by providing received analogue audio signals over a twisted pair signal line 16. A compact disc jockey (CDJ) 17 provides analogue audio signals to module 11 over signal lines 18. A navigation unit 20 performs route calculation and route guidance based upon inputs of a current location and a desired location. Audible prompts are created by navigation module 20 and are provided to module 11 as analogue audio signals via signal lines 21, again comprising a twisted wire pair.

All of these modules are interconnected by a low speed multiplex communication system 22. Thus, the HMI in module 10 may be utilised by a driver or occupant of a vehicle to produce commands which affect operation of the media player, voice recognition system, cellular phone, CDJ, and navigation system, as well as tuner and audio processing functions of module 11. Additional remote controls are provided by a steering wheel control (SWC) switch panel 23 and a rear integrated control panel (RICP) 24, both of which are coupled to multiplex system 22. Depending upon the specifics of the multiplex system which may be employed, from 3 to 5 wires are required for implementing the multiplex system. Thus, the architecture of Figure 1 requires a large number of wires within the vehicle to interconnect the large number of separate modules. Furthermore, additional functions can be added to the system only with great difficulty and at great expense.

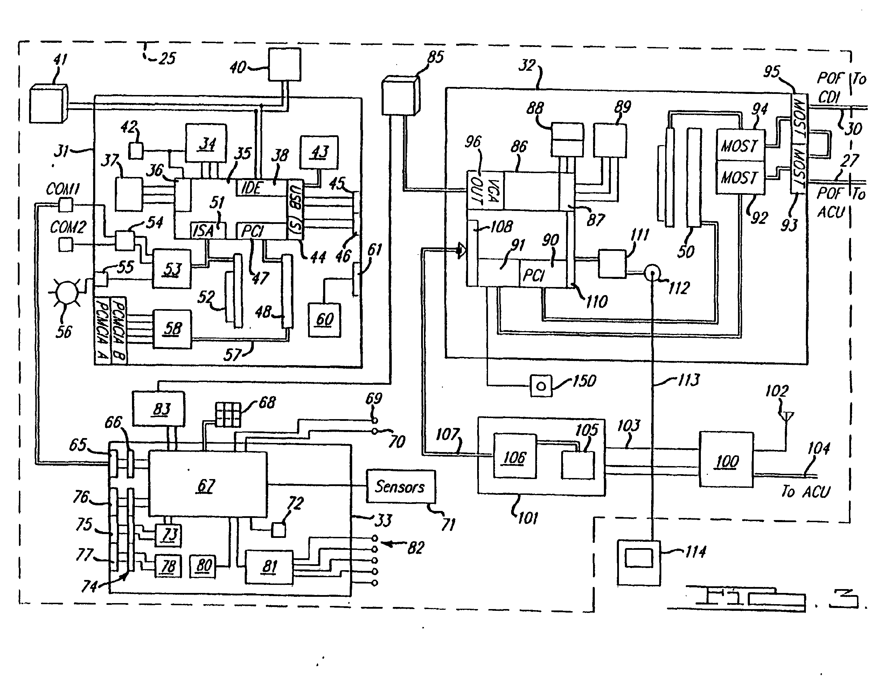

The present invention takes advantage of a complex instruction set processor and plastic optical fibre communications to achieve the novel architecture shown in Figure 2. A front control unit (FCU) 25 includes an HMI, a media player, a complex instruction set processor such as a Intel Pentium x86 type processor, a voice recognition function, and a navigation function. FCU 25 is coupled to an audio communication unit (ACU) 26 by a plastic optical fibre 27. ACU 26 includes a broadcast tuner (such as AM/FM), an amplifier, a cellular phone transceiver, and a global positioning system (GPS) receiver. This architecture also supports an optional compact disc jockey (CDJ) 28 as a third module of the system. CDJ 28 is coupled to ACU 26 by plastic optical fibre 29 and to FCU 25 by plastic optical fibre 30, resulting in a plastic optical ring.

The network of Figure 2 achieves centralised control via one main scalable processor, preferably an X86 type of processor, for running all system applications and thus eliminating many of the distributed processor functions of the multiple processor system of Figure 1. Plastic optical fibre is utilised to perform data and control multiplexing including transmission of digital audio and video signals. A plastic optical network is preferably implemented using a network protocol such as the Media Oriented System Transport (MOST) protocol.

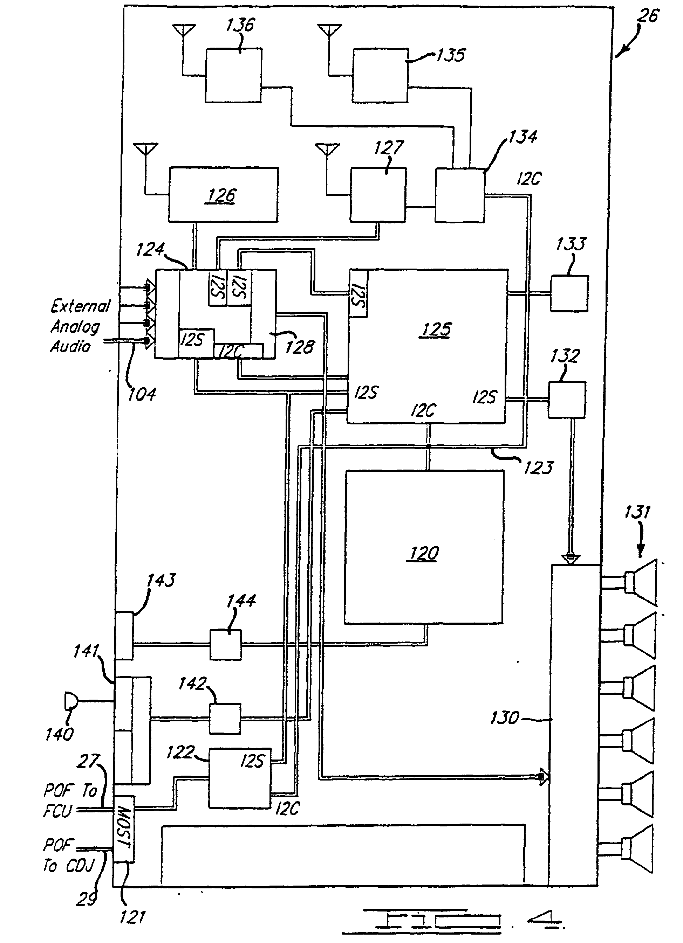

FCU 25 is shown in greater detail in Figure 3. A motherboard 31 is connected to a video processor board 32 and an input/output board 33. Motherboard 31 includes a complex instruction set processor 34 which may be comprised of an Intel Celleron processor, for example, and which is connected to a support chip 35 which may preferably be comprised of an Intel banister bridge support chip. The support chip includes a DRAM memory controller 36 for controlling a DRAM memory 37. Support chip 35 includes an IDE controller 38 for interfacing with a compact Flash drive 40 and a DVD/CD-ROM drive 41. Compact Flash drive 40 is preferably an IDE/ATA drive and stores operating system and application software for the information, communication, and entertainment system. Drive 41 is a data storage drive for removable media such as DVD-ROM or CD-ROM and may be used for providing application software or data software, such as a map database for a navigation system.

A clock oscillator 42 is connected to processor 34 and support chip 35 for providing timing signals. A basic input/output system (BIOS) chip 43 is connected to support chip 35 and provides boot-up and BIOS input/output instructions used during processor operation. A universal serial bus (USB) interface 44 is connected to a pair of physical layer output circuits 45 and 46 which may be connected to USB peripheral expansion devices as desired.

Support chip 35 further includes a peripheral component interconnect (PCI) bus interface which is connected to a PCI expansion slot 48. Expansion slot 48 receives a PCI card connector 50 contained on video processor board 32 to interconnect boards 31 and 32.

Support chip 35 also includes an industry standard architecture (ISA) expansion bus interface 51 connected to an ISA expansion slot 52 and to a multi-I/O chip 53. Multi-I/O chip 53 performs peripheral communication handling for serial ports, parallel ports, infrared communication (such as IrDA, the standard of the Infrared Data Association), and other standard I/O protocols. Multi-I/O chip 53 may be comprised of an NS 87308 chip manufactured by National Semiconductor, for example. A physical layer circuit block 54 connects multi-I/O chip 53 with serial ports COM1 and COM2. IrDA physical layer 55 connects multi-I/O chip 53 with an infrared receiver 56.

A PCI expansion bus 57 from expansion slot 48 is coupled to a PCMCIA cardbus 58 (a PCI1225 available from Texas Instruments, for example) which is connected to PCMCIA connectors A and B.

A universal asynchronous receiver-transmitter (UART) chip 60 is connected to a connector 61 and interfaces via the ISA bus.

Although various resources are shown on motherboard 31, not all are necessarily used in any particular embodiment of the invention. For example, serial port COM2, PCMCIA connectors A and B, USB expansion connectors 45 and 46, UART connector 61, and ISA expansion slot 52 are not shown as being used in the embodiment shown in Figure 3. However, these resources are available for scalable expansion of features and capabilities of the information, communication, and entertainment system.

Serial port COM1 is connected to a serial port connector 65 of input/output board 33. A physical layer interface circuit 66 couples serial connector 65 to an input/output microprocessor 67, which may be comprised of a Motorola 68HC912 microprocessor. Microprocessor 67 handles input of signals from user input elements and various vehicle sensors, and handles the operation of various power supplies within the information, communication, and entertainment system. The power management performed by microprocessor 67 and input/output board 33 is described in greater detail in co-pending application U.S. serial number (199-0056), which is incorporated herein by reference.

Microprocessor 67 is coupled to a keypad 68 containing push button switches mounted to a control panel or bezel (not shown) of FCU 25. Various adjustment knobs or encoders 69 and 70 are also connected to microprocessor 67 for generating user input signals for controlling various functions of the system. The various functions controlled by user input elements 68-70 may include radio tuning, audio volume, CDJ song selection, navigation system destination address input, cellular telephone dialling, and many others.

Microprocessor 67 is also connected to a plurality of sensors 71 which may provide information used by the navigation application software, for example. The sensors could include odometer signals and a gear selector (reverse or forward selector) signal for the purpose of monitoring vehicle motion by dead reckoning. Additionally, a gyroscope 72 may be mounted directly to input/output board 33 and connected to microprocessor 67 for monitoring vehicle movement.

In keeping with the scalable architecture of the present invention, additional inputs and outputs may be coupled to processor 67 via a variety of input/output protocols. Thus, a UART interface 73 couples processor 67 to a physical layer 74 and a UART connector 75. A pair of multiplex connectors 76 and 77 are coupled through physical layer 74 to microprocessor 67. A multiplex application circuit 78 may also be included if necessary for the multiplex protocol being used.

A voltage regulator 80 provides power to microprocessor 67 and its support components.

Microprocessor 67 controls a power controller and regulator 81, which may be comprised of an LM2640 integrated circuit manufactured by national semiconductor. A variety of regulated voltages are provided at voltage output pins 82 to be used by various components within the information, communication and entertainment system. A separate power supply 83 may be coupled to microprocessor 67 having the specialised purpose of providing power to a thin-film transistor (TFT) LCD display 85. Power supply 83 may be comprised of a cold cathode florescent lamp power supply, for example.

Video processor board 32 connects to the PCI bus of main control motherboard 31 and drives colour graphics display 85. Video processor board 32 includes a media processor 86 including a graphics display driver and means for performing various video encoding and decoding functions. Media processor 86 may be comprised of an MPACT2 media processor made by Chromatic Research, for example. Media processor 86 includes a memory interface 87 connected to DRAM 88 and a Flash BIOS 89. A PCI interface 90 is coupled to expansion connector 50. A peripheral input/output interface 91 is coupled to a MOST transceiver 92. MOST transceiver 92 may be comprised of an OS8104 network transceiver integrated circuit available from OASIS Silicon Systems AG. A MOST connector 93 connects to plastic optical fibre 27 which is coupled to ACU 26. A second MOST transceiver 94 is coupled to the PCI bus of video processor board 32 and also allows main processor 34 to communicate with the MOST network via MOST connector 95 and plastic optical fibre 30.

The video graphics display driver of media processor 86 provides a VGA output 96 which is coupled to graphics display 85. Actual video data may be provided via PCI connector 50 from control motherboard 31, or may be provided by other sources communicating with media processor 86 such as a TV tuner 100 and a video decoder 101. Thus, broadcast television signals may be received by an antenna 102, with TV tuner 100 producing an NTSC video output 103 which is coupled to video decoder 101. An analogue audio output may be provided directly to audio communications unit 26 via an analogue audio line output 104. Alternatively, the TV audio output could be digitised and provided digitally to ACU 26 via MOST transceiver and plastic optical fibre from video processor board 32.

Video decoder 101 may be comprised of a programmable gate array 105 and a video input processor 106, which may be comprised of an SAA7111A enhanced video processor available from Philips Semiconductors. Video decoder 101 decodes NTSC video from TV tuner 100 and produces a digital video output according to the CCIR601 standard, which is provided to a CCIR interface 108 and media processor 86.

Television video signals processed by media processor 86 may be output through a CCIR compliant output interface 110 to a video encoder 111. DVD digital video data may also be sent to the video encoder, as well. Encoded video is provided through an output video connector 112 and over a video transmission line 113 to a rear seat video display 114 which may be comprised of an LCD colour display.

A joystick 150 is connected to peripheral input/output interface 91.

Turning now to Figure 4, audio communication unit 26 will be described in greater detail. An ACU microprocessor 120 performs ACU operations and operates under control of main processor 34 on control motherboard 31 in response to signals received over plastic optical fibre 27 through MOST connector 121 and MOST transceiver 122. Transceiver 122 has an inter-integrated circuit (I2C) serial bus which carries control information to processor 120 over a bus 123.

Transceiver 122 also has an inter-IC sound (I2S) bus output which provides digital audio signals to an audio digital signal processor (DSP) 124 and to second digital signal processor (DSP) 125 through their I2S interfaces. DSP 124 also receives audio inputs from an AM/FM/RDS tuner 126, a cellular telephone board 127, and from external analogue audio such as TV audio from TV tuner 100. Analogue inputs are digitised and then processed within DSP 124 generating two or four channels of digital audio signals. The input from tuner 126 may be an intermediate frequency (IF) signal which is processed by DSP 124 to recover the original modulating audio signals.

DSP 124 includes digital-to-analogue converters 128 for providing analogue audio signals over audio lines 129 to audio amplifier 130 having multiple channels for driving a plurality of loudspeakers 131. DSP 125 provides additional audio processing such as surround sound, Dolby digital, or other audio effects and provides digital audio signals to a digital-to-analogue converter block 132. Analogue audio signals for these additional audio channels are provided to amplifier 130. DSP 125 may utilise an external memory such as SRAM 133.

A MOST transceiver 134 coupled to MOST transceiver 122 over bus 123 provides additional interfacing for cellular telephone board 127, GPS receiver board 135, and wireless data transceiver board 136. Digital data from these units are provided to the main control processor via the MOST network.

An additional analogue audio input may be provided by a microphone 140 (e.g., for connection to the cellular telephone) via an analogue input 141 coupled to a codec 142 providing input audio signals to DSP 125.

Scalability and expansion of functions performed by processor 120 may be facilitated by a multiplex input 143 and its physical layer circuit 144.

The foregoing system has provided an architecture for a vehicle information, communication, and entertainment system which is highly efficient and which provides an open, scalable architecture for implementing various functions and features in a vehicle. Due to limited power availability in mobile vehicles, prior architectures utilised reduced instruction set processors which consume less power. However, in such systems an open, scalable architecture has not been achieved and access to existing application software programs and operating systems has been quite limited. The segmentation of functions and components according to the present invention and the use of plastic optical fibre in a network ring have provided significant advantages unachievable according to the prior art. In addition, system expansion is also achievable by additional components in the plastic optical ring itself. Thus, additional remote control stations within the vehicle or additional video monitors may be located within the vehicle by adding these units to the optical ring.

## Claims

1. A vehicle information, communication, and entertainment system providing mobile operation in a vehicle, comprising:
a front control unit (25) including a system control unit (31) and a video processor (32) with a graphics display driver, said front control unit (25) further including user input elements (68-70) and a graphics display (85) coupled to said graphics display driver for providing a human-machine interface of said system for a user of said vehicle; and
an audio communication unit (26) located remotely from said front control unit (25) and including a digitally controlled audio processor (125), a broadcast radio tuner (126), and an audio amplifier (130) with audio outputs for coupling to audio transducers;
**characterised in that**;
the front control unit (25) has a system control unit (31) that includes a control motherboard (31) with a complex instruction set processor (34), providing an open, scalable architecture,
the front control unit (25) includes an I/O board (33) including an I/O microprocessor (67) connected to the control motherboard (31) and the user input elements (68-70) are coupled to said complex instruction set processor (31) through the I/O board (33),
the audio communication unit (26) provides an open, scalable architecture, and
a plastic optical fibre (27) interconnects said front control unit (25) and said audio communication unit (26);
wherein said front control unit (25) and said audio communication unit (26) each include respective optical transceivers (92,94,122,134) for multiplexing digital data signals and digital control signals over said plastic optical fibre (27); and
wherein said complex instruction set processor (34) maintains central control over operation of said system.

2. A system as claimed in claim 1 further comprising:
a disc jockey unit (28) located remotely from said front control unit (25) and said audio communication unit (26), said disc jockey unit (28) receiving multiple pre-recorded discs and reproducing data signals therefrom; and
plastic optical fibres interconnecting said disc jockey unit (28) with said front control unit (25) and said audio communication unit (26), respectively;
said disc jockey unit (28) including a respective optical transceiver for multiplexing digital data signals and digital control signals over said plastic optical fibres (27).

3. A system as claimed in claim 1, wherein said front control unit (25) further comprises a data storage drive (41) for removable media coupled to said control motherboard (31).

4. A system as claimed in claim 1, wherein said audio communication unit (26) further comprises a mobile phone transceiver (127) which is controlled by control signals from said front control unit (25) via said plastic optical fibre (27).

5. A system as claimed in claim 1, wherein said broadcast radio tuner (126) is comprised of an AM/FM radio tuner, or a GPS receiver.

6. A system as claimed in claim 1, wherein said front control unit (25) further comprises a program memory (40) storing application software for information, communication, and entertainment features.

7. A system as claimed in claim 6, wherein said program memory (40) is comprised of a flash drive.

8. A system as claimed in claim 6, wherein said application software includes navigation route calculation and route guidance software.

9. A system as claimed in claim 6, wherein said application software includes web browser and electronic mail software.

10. A system as claimed in claim 6, wherein said user control elements include a microphone (140) and wherein said application software includes voice recognition software.

## Patentansprüche

1. Fahrzeug-Informations-, Kommunikations- und Unterhaltungssystem für mobilen Betrieb in einem Fahrzeug, folgendes aufweisend:
eine Front-Bedieneinheit (25) mit einer Systemsteuereinheit (31) und einem Videoprozessor (32) mit einem Graphikanzeigetreiber, wobei besagte Front-Bedieneinheit (25) außerdem Benutzer-Eingabeelemente (68-70) und einen Graphikanzeigebildschirm (85) beinhaltet, welcher mit besagtem Graphikanzeigetreiber verbunden ist, so daß eine Mensch-Maschine-Schnittstelle des besagten Systems für einen Benutzer des besagten Fahrzeuges geschaffen wird; und
eine Audio-Kommunikationseinheit (26), welche abgesetzt von besagter Front-Bedieneinheit (25) angeordnet ist und einen digital gesteuerten Audio-Prozessor (125), einen Rundfunk-Radioempfänger (126) und einen Audio-Verstärker (130) mit Audio-Ausgängen zum Anschluß an Audio-Wandler aufweist;
**dadurch gekennzeichnet, daß**
die Front-Bedieneinheit (25) eine Systemsteuereinheit (31) beinhaltet, welche eine Steuerungshauptplatine (31) mit einem Prozessor (34) für komplexe Anweisungssätze aufweist, so daß eine offene, skalierbare Architektur geschaffen wird,
die Front-Bedieneinheit (25) eine I/O-Platine (33) und einen I/O-Prozessor (67) aufweist, der mit der Hauptsteuerplatine (31) verbunden ist, und die Benutzer-Eingabeelemente (68-70) über besagte I/O-Platine (33) mit besagtem Prozessor (31) für komplexe Anweisungssätze verbunden sind,
die Audio-Kommunikationseinheit (26) eine offene, skalierbare Architektur bietet, und
eine Kunststoff-Lichtleitfaser (27) die besagte Front-Bedieneinheit (25) mit besagter Audio-Kommunikationseinheit (26) verbindet;
worin besagte Front-Bedieneinheit (25) und besagte Audio-Kommunikationseinheit (26) jeweils einen entsprechenden optischen Senderempfänger (92, 94, 122, 134) zur Multiplexierung digitaler Datensignale und digitaler Steuersignale über die besagte Kunststoff-Lichtleitfaser (27) aufweisen; und
worin besagter Prozessor (34) für komplexe Anweisungssätze eine zentrale Kontrolle über den Betrieb des besagten Systems behält.

2. System nach Anspruch 1, außerdem folgendes aufweisend:
eine abgesetzt von besagter Front-Bedieneinheit (25) und besagter Audio-Kommunikationseinheit (26) angeordnete Plattenprogramm- oder Discjockey-Einheit (28), wobei besagte Discjockey-Einheit (28) mehrere im voraus aufgezeichnete Platten aufnimmt und Datensignale von diesen wiedergibt; und
Kunststoff Lichtleitfasern, welche besagte Discjockey-Einheit (28) jeweils mit besagter Front-Bedieneinheit (25) und besagter Audio-Kommunikationseinheit (26) verbinden;
wobei besagte Discjockey-Einheit (28) einen entsprechenden optischen Senderempfänger zur Multiplexierung digitaler Datensignale und digitaler Steuersignale über besagte Kunststoff-Lichtleitfasern (27) aufweist.

3. System nach Anspruch 1, worin besagte Front-Bedieneinheit (25) außerdem ein Datenspeicherlaufwerk (41) für herausnehmbare Medienträger aufweist, das mit besagter Hauptsteuerplatine (31) verbunden ist.

4. System nach Anspruch 1, worin besagte Audio-Kommunikationseinheit (26) des weiteren einen mobilen Telefon-Senderempfänger (127) aufweist, der durch Steuersignale von besagter Front-Bedieneinheit (25) über besagte Kunststoff-Lichtleitfasern (27) gesteuert wird.

5. System nach Anspruch 1, worin besagter Rundfunk-Radioempfänger (126) von einem AM/FM-Radioempfänger oder einem GPS-Empfänger gebildet wird.

6. System nach Anspruch 1, worin besagte Front-Bedieneinheit (25) außerdem einen Programmspeicher (40) zur Speicherung von Anwendungsprogrammen für Informations-, Kommunikations- und Unterhaltungsfunktionen aufweist.

7. System nach Anspruch 6, worin besagter Programmspeicher (40) von einem sogenannten *Flash-Drive-*Speicher oder Flashspeicher- Lesereinheit gebildet wird.

8. System nach Anspruch 6, worin besagte Anwendungsprogramme Navigations-, Routenberechnungs- und Routenleitprogamme beinhalten.

9. System nach Anspruch 6, worin besagte Anwendungsprogramme ein Internet-Besichtigungsprogramm oder -Navigationsprogramm(sogenannten *Web Browser*) und ein Programm für elektronische Korrespondenz (sogenannte *E-Mail*) beinhalten.

10. System nach Anspruch 6, worin besagte Benutzer-Bedienelemente ein Mikrophon (140) beinhalten, und worin besagte Anwendungsprogramme ein Spracherkennungsprogramm beinhalten.

## Revendications

1. Système d'informations, de communication et de divertissement de véhicule permettant un fonctionnement mobile dans un véhicule, comprenant :
une unité de commande avant ou frontale (25) comportant une unité de commande de système (31) et un processeur vidéo (32) avec un pilote d'affichage graphique, ladite unité de commande avant ou frontale (25) comprenant en outre des éléments d'entrée de l'utilisateur (68 à 70) et un dispositif d'affichage graphique (85) reliés audit pilote d'affichage graphique afin de procurer une interface homme-machine dudit système pour un utilisateur dudit véhicule, et
une unité de communication audio (26) située à distance de ladite unité de commande avant ou frontale (25) et comprenant un processeur audio commandé numériquement (125), un syntoniseur radio de télédiffusion (126), et un amplificateur audio (130) avec des sorties audio pour une liaison avec des transducteurs audio,
**caractérisé en ce que**,
l'unité de commande avant ou frontale (25) comporte une unité de commande de système (31) qui inclut une carte mère de commande (31) avec un processeur à jeu d'instructions complexe (34), procurant une architecture ouverte pouvant être redimensionnée,
l'unité de commande avant ou frontale (25) comprend une carte d'entrées/sorties (33) comprenant un microprocesseur d'entrées/sorties (67) relié à la carte mère de commande (31) et les éléments d'entrée de l'utilisateur (68 à 70) sont reliés audit processeur à jeu d'instructions complexe (31) par l'intermédiaire de la carte d'entrées/sorties (33),
l'unité de communication audio (26) procure une architecture ouverte pouvant être redimensionnée, et
une fibre optique en matière plastique (27) interconnecte ladite unité de commande avant ou frontale (25) et ladite unité de communication audio (26),
dans lequel ladite unité de commande avant ou frontale (25) et ladite unité de communication audio (26) comprennent chacune des émetteurs-récepteurs optiques respectifs (92, 94, 122, 134) afin de multiplexer des signaux de données numériques et des signaux de commande numérique sur ladite fibre optique en matière plastique (27), et
dans lequel ledit processeur à jeu d'instructions complexe (34) maintient une commande centralisée sur le fonctionnement dudit système.

2. Système selon la revendication 1, comprenant en outre :
une unité de programmateur de disques (28) située à distance par rapport à ladite unité de commande avant (25) et ladite unité de communication audio (26), ladite unité de programmation de disques (28) recevant des disques préenregistrés multiples et reproduisant des signaux de données à partir de ceux-ci, et
des fibres optiques en matière plastique interconnectant ladite unité de programmateur de disques (28) à ladite unité de commande avant (25) et à ladite unité de communication audio (26), respectivement,
ladite unité de programmateur de disques (28) comprenant un émetteur-récepteur optique respectif afin de multiplexer des signaux de données numériques et des signaux de commande numérique sur lesdites fibres optiques en matière plastique (27).

3. Système selon la revendication 1, dans lequel ladite unité de commande avant (25) comprend en outre un lecteur de mémoire de données (41) destiné à des supports amovibles relié à ladite carte mère de commande (31).

4. Système selon la revendication 1, dans lequel ladite unité de communication audio (26) comprend en outre un émetteur-récepteur de téléphone mobile (127) qui est commandé par les signaux de commande provenant de ladite unité de commande avant (25) par l'intermédiaire de ladite fibre optique en matière plastique (27).

5. Système selon la revendication 1, dans lequel ledit syntoniseur radio de télédiffusion (126) est constitué d'un syntoniseur radio de type AM/FM ou d'un récepteur du système GPS.

6. Système selon la revendication 1, dans lequel ladite unité de commande avant (25) comprend en outre une mémoire de programme (40) mémorisant un logiciel d'application pour des éléments d'informations, de communication et de divertissement.

7. Système selon la revendication 6, dans lequel ladite mémoire de programme (40) est constituée d'un lecteur de mémoire de type Flash.

8. Système selon la revendication 6, dans lequel ledit logiciel d'application comprend un logiciel de calcul d'itinéraire de navigation et de guidage sur itinéraire.

9. Système selon la revendication 6, dans lequel ledit logiciel d'application comprend un logiciel de navigateur du réseau Web et de courrier électronique.

10. Système selon la revendication 6, dans lequel lesdits éléments de commande de l'utilisateur comprennent un microphone (140) et dans lequel ledit logiciel d'application comprend un logiciel de reconnaissance vocale.
